# NEUE EUROPÄISCHE PATENTSCHRIFT

(11) **EP 2 455 208 B2**
(45) Veröffentlichungstag und Bekanntmachung des Hinweises auf die Entscheidung über den Einspruch: **20.07.2022**
(45) Hinweis auf die Patenterteilung: 13.06.2018
(21) Anmeldenummer: 11189738.5
(22) Anmeldetag: 18.11.2011
(51) Int. Cl.: B29C 49/56, B29C 49/42, B29C 49/48

(54) **Vorrichtung und Verfahren zur Bodenformhubdämpfung**
Base mould lift attenuation
Amortissement par levage d'un moule au sol

(30) Priorität: 18.11.2010 DE 102010051544
(43) Veröffentlichungstag der Anmeldung: 23.05.2012
(73) Patentinhaber: Krones AG, 93073 Neutraubling (DE)
(72) Erfinder: Spitzer, Thomas, 93073 Neutraubling (DE)
(74) Vertreter: Bittner, Bernhard

(56) Entgegenhaltungen:
- WO-A2-2010/122481
- US-A- 4 141 680
- US-A1- 2005 238 753
- US-A1- 2006 093 699
- US-A1- 2008 063 742
- US-A1- 2008 260 884
- US-B1- 6 805 548

## Beschreibung

Die vorliegende Erfindung bezieht sich auf eine Vorrichtung zum Formen von Behältnissen sowie auf ein Verfahren zum gedämpften Schließen einer Formträgereinheit und eines Bodenformträgers einer Blasform zum Formen von Behältnissen gemäß den Oberbegriffen der Ansprüche 1 und 9. Blas-/Streckmaschinen bzw. -anlagen zum Formen von Kunststoffbehältnissen aus beispielsweise einem Vorformling bzw. einem Preform sind aus dem Stand der Technik weitgehend bekannt. Diese Anlagen weisen eine Vielzahl an Vorrichtungen (auch als Blasstationen bezeichnet) zum Blasen und Strecken von Behältnissen auf, welche mindestens eine Formträgereinheit, welche aus zwei Formträgern besteht und eine Bodenform aufweisen.

Eine derartige Blasmaschine und Verfahren zur Herstellung von Behältnissen ist beispielsweise in der US 2008/0063742 A1 oder in der US2006093699 A1, die die Oberbegriffen der Ansprüche 1 und 9 offenbaren, beschrieben.

Die Bodenform, welche bei konventionellen Streck-/Blasmaschinen auf einem Bodenformträger angeordnet ist, wird durch eine entsprechende Hubeinrichtung während des Schließens der Formträgereinheit in Richtung dieser Formträgereinheit bewegt, so dass die Formträgereinheit und die Bodenform letztendlich derart aufeinander bzw. aneinander fahren, dass sie eine das zu formende Behältnis umgebende Wandung bilden. Demnach umschließt die Formträgereinheit die Seitenwandungen des zu formenden Behältnisses, während die Bodenform den Bodenbereich des Behältnisses abdeckt.

Bei dieser gerichteten und üblicherweise ungebremsten und sehr schnellen Bewegung der Bodenform in Richtung der Formträgereinheit kommt es folglich oftmals zu einer Kollision zwischen der Bodenform und den einzelnen Formträgern, wodurch die einzelnen Komponenten beschädigt werden können. Infolgedessen wäre eine einwandfreie Abdichtung des Innenbereiches, in welchem das Behältnis geformt wird, zu dem Außenbereich durch die aus der Bodenform und der Formträgereinheit gebildete Wandung nicht mehr gegeben.

Somit ist es erforderlich die Bewegung der Bodenform gegenüber der Formträgereinheit kontrolliert, mit beispielsweise einer stoßdämpfenden Vorrichtung abzubremsen.

Derartige stoßdämpfende Vorrichtungen sind beispielsweise in der WO 2006/032503 A2 beschrieben, wobei hierbei die offenbarte Maschine zum Formen von Kunststoff neben einer Formvorrichtung und einer Betätigungsvorrichtung auch eine stoßdämpfende Vorrichtung aufweist. Diese stoßdämpfende Vorrichtung umfasst einen pneumatischen Zylinder, welcher zwischen der Matrize und/oder der Stanze und der jeweiligen Betätigungsvorrichtung, welche die Matrize und die Stanze in Position bewegen, angeordnet ist. Diese stoßdämpfenden Vorrichtungen ermöglichen eine konstante Aufrechterhaltung des Druckes, welchem die Matrize und die Stanze unterworfen sind oder verhindern beispielsweise einen Überdruck, welcher durch eine Beschädigung der Formvorrichtung erzeugt werden kann. Demzufolge sind diese stoßdämpfenden Vorrichtungen lediglich druckregulierende Elemente, welche jedoch nicht die Bewegung der sich aufeinander zu bewegenden Elemente, hier Matrize und Stanze steuert.

Zum lediglich gleichmäßigen Reduzieren einer Schließgeschwindigkeit wird beispielsweise in der EP 0 425 388 B1 ein Stoßdämpfer beschrieben, welcher zur Aufnahme eines neben einer Absenkstange und auf einer Schließplatte angeordneten Verlangsamungsschaftes in einer Rotations-Spritzgießmaschine mit einer entsprechenden Schließeinrichtung angeordnet ist, um die Bewegung der Schließplatte zu reduzieren. Jedoch wird hier ein Auftreffen der sich schließenden Elemente nicht begrenzt.

Demnach ist es die Aufgabe der vorliegenden Erfindung eine derartige Kollision von der Bodenform bzw. der Bodenformoberkante und den Formträgereinheiten bzw. der Formträgerunterkannte zu vermeiden, um einen verlängerten Einsatz der Bodenform und der Formträger zu ermöglichen und folglich dadurch wirtschaftlicher bzw. kostengünstiger Behältnisse formen zu können.

Diese Aufgabe löst die vorliegende Erfindung mittels einer Vorrichtung zum Formen von Behältnissen und einem Verfahren zum gedämpften Schließen einer Formträgereinheit und eines Bodenformträgers einer Blasform zum Formen von Behältnissen gemäß den Ansprüchen 1 und 9. Die erfindungsgemäße Vorrichtung zum Formen von Behältnissen ist in dem Anspruch 1 definiert. Das Dämpfungselement, welches auch mehrteilig aufgebaut sein dient also einerseits dazu, um die Bewegung der Bewegung des Bodenformträgers gegenüber der Formträgereinheit zu dämpfen, und bevorzugt andererseits auch dazu, um einen Endanschlag für diese Bewegung zu bilden.

Demzufolge weist die Vorrichtung einen Formträgerhalter mit einer daran drehbar bzw. schwenkbar angeordneten Formträgereinheit aus mindestens zwei Formträgern sowie eine Bodenformträgerhubeinrichtung mit einem daran angeordneten Bodenformträger zum Tragen bzw. Bewegen der Bodenform auf.

Vorteilhaft wird eine Bewegung wenigstens eines Formträgers und des Bodenformträgers wenigstens zeitweise während des Öffnens und/oder Schließens der Blasform bzw. der Formträgereinheit miteinander gekoppelt.

Die Bodenformträgerhubeinrichtung weist erfindungsgemäß eine zu einem Haupthalteelement bewegliche Bodeneinheit und einen dazu unbeweglichen Grundträger auf, wobei der Bodenformträger selbst beweglich zu dem Grundträger angeordnet ist. Der Begriff unbeweglich wird hier insbesondere unter Bezugnahme zu einer Transporteinrichtung, welche die gesamte Vorrichtung transportiert, verstanden. Bevorzugt ist eine Vielzahl derartiger Vorrichtungen an einer gemeinsamen Transporteinrichtung und insbesondere an einem gemeinsamen, sich um eine vorgegebene Achse drehenden, Blasrad vorgesehen. Daneben kann die Vorrichtung auch eine Reckstange aufweisen, welche die Kunststoffvorformlinge während eines Umformungsprozesses entlang deren Längsrichtung dehnt. Vorteilhaft ist daher die Vorrichtung Bestandteil einer Blasstation, die zum Umformen von Kunststoffvorformlingen zu Kunststoffbehältnissen dient. Diese Blasstation weist dabei vorteilhaft auch eine Blasdüse auf, welche die Kunststoffvorformlinge zu Kunststoffbehältnissen expandiert. Vorteilhaft handelt es sich bei der hier beschriebenen Anlage um eine Streckblasmaschine.

Das Öffnen und Schließen der Blasformen kann dabei über (stationär angeordnete) Steuerkurven, aber auch über elektrische oder magnetische Antriebe erfolgen.

Demnach ist erfindungsgemäß der Bodenformträger an der beweglichen Bodeneinheit angeordnet, um die Bodenform beim Schließen der Formträgereinheit in Richtung der Formträgereinheit zu bewegen.

Demgegenüber ist die Formträgereinheit vorzugsweise schwenkbar an einem Formträgerhalter angeordnet, wobei der Formträgerhalter und die Bodenformträgerhubeinrichtung besonders bevorzugt verdrehsteif miteinander verbunden sind.

D.h., dass der Formträgerhalter und die Bodenformträgerhubeinrichtung bevorzugt entweder aus einem zusammenhängenden bzw. gemeinsamen Material geformt wurden oder derart durch beispielsweise Schraub- oder Schweißverbindungen miteinander verbunden wurden, dass beispielsweise eine Bewegung des Formträgerhalters gegenüber der Bodenformträgerhubeinrichtung nicht ermöglicht wird.

Das zum Dämpfen und Begrenzen der im Wesentlichen vertikalen Bewegung des Bodenformträgers gegenüber der Formträgereinheit verwendete erste Dämpfungselement ist erfindungsgemäß an dem Grundträger der Bodenformträgerhubeinrichtung angeordnet.

Demnach ist das Dämpfungselement selbst bevorzugt unbeweglich, beispielsweise über einen Halteklotz, an der Bodenformträgerhubeinrichtung gelagert, so dass eine Dämpfung und/oder Begrenzung der Bewegung des Bodenformträgers und folglich damit der Bodenform durch ein weiteres bewegliches Element, welches folglich durch das Dämpfungselement in der Bewegung reduziert bzw. behindert bzw. verlangsamt wird, ermöglicht wird.

Infolgedessen weist beispielsweise ein Haltefinger, welcher mit der Bodeneinheit der Bodenformträgerhubeinrichtung gekoppelt ist und sich mit dieser bewegt, einen bei dem Schließvorgang der Formträgereinheit auf das Dämpfungselement auftreffenden Anschlagkörper, insbesondere Anschlagbolzen auf.

Demnach wird durch die Bewegung des Bodenformträgers bzw. der beweglichen Bodeneinheit der Haltefinger mit dem daran angeordneten Anschlagbolzen beim Schließen der Formträgereinheit im Wesentlichen nach oben bewegt. Dadurch wird der Anschlagbolzen, welcher vorzugsweise direkt mit dem ersten Dämpfungselement interagiert, durch das erste Dämpfungselement in der vertikalen Bewegung, durch beispielsweise die Beaufschlagung des Anschlagbolzens mit einer der Bewegungsrichtung entgegen gesetzten Druckkraft, zuerst verlangsamt und beispielsweise nach einer definierten Bewegung begrenzt.

In einer weiteren bevorzugten Ausführungsform weist ein an mindestens einem der mindestens zwei Formträger angeordneter und durch den Formträger beweglicher Kurvenhebel eine Kurvenrolle auf, welche in einer Bodenkurve bewegbar angeordnet ist.

Werden die Formträger aufeinander zu bewegt, d.h. schließt sich die Formträgereinheit, so erfolgt ebenfalls eine vorgegebene, bevorzugt im Wesentliche horizontale Bewegung des Kurvenhebels, welcher mit vorzugsweise dem rechten Formträger verdrehsteif und bewegungslos verbunden ist. Dadurch rollt die an dem Kurvenhebel angeordnete Kurvenrolle vorzugsweise in bzw. entlang einer Führungsschiene einer Bodenkurve ab, wodurch die Bodenkurve in senkrechter Richtung nach oben gezogen bzw. geführt bzw. bewegt wird.

Infolgedessen ist die Bodeneinheit der Bodenformträgerhubeinrichtung zur Bewegungsübertragung derart mit der Bodenkurve verbunden, dass die Bodeneinheit sowie die Bodenform im Wesentlichen senkrecht beweglich sind.

In einer weiteren bevorzugten Ausführungsform weist mindestens ein Formträger der Formträgereinheit ein zweites, bevorzugt im Wesentlichen horizontal dämpfend wirkendes Dämpfungselement zur Dämpfung der Bewegung der sich schließenden Formträgereinheit auf. Vorzugsweise weist das erste und/oder das zweite Dämpfungselement eine Feder auf, welches die Bewegung selbst dämpfen bzw. begrenzen kann oder unterstützend als Sekundärelement ein Primärelement, z.B. den hydraulischen Stoßdämpfer bei der Dämpfung und/oder der Begrenzung der Bewegung unterstützt.

Dementsprechend ist das erste und/oder das zweite Dämpfungselement beispielsweise ein Stoßdämpfer.

Des Weiteren wird ein erfindungsgemäßes Verfahren zum gedämpften Schließen einer Formträgereinheit und eines Bodenformträgers einer Blasform zum Formen von Behältnissen in dem Anspruch 9 definiert. Es wäre jedoch in einer nicht erfindungsgemäßen Variante des Verfahrens umgekehrt auch möglich, dass das Dämpfungselement mit der beweglichen Bodeneinheit und der Anschlagkörper bzw. Anschlagbolzen mit dem unbeweglichen Grundträger verbunden ist.

Weitere Vorteile, Ziele und Eigenschaften der vorliegenden Erfindung werden anhand nachfolgender Beschreibung anliegender Zeichnung erläutert, in welcher beispielhaft eine Ausführungsform der erfindungsgemäßen Vorrichtung dargestellt wird.

Komponenten, welche in den Figuren wenigstens im Wesentlichen hinsichtlich ihrer Funktion übereinstimmen, können hierbei mit gleichen Bezugszeichen gekennzeichnet sein, wobei diese Komponenten nicht in allen Figuren gekennzeichnet und erläutert sein müssen.

In den Figuren zeigen:
- Fig. 1: eine Prinzipskizze einer Formträgereinheit in geschlossener Position,
- Fig. 2: eine Prinzipskizze eines rechten Formträgers,
- Fig. 3: eine Prinzipskizze einer Seitenansicht eines Formträgerhalters mit daran angeordneter Bodenformträgereinheit gemäß einer Ausführungsform der erfindungsgemäßen Vorrichtung,
- Fig. 4: eine Prinzipskizze einer Frontansicht eines Formträgerhalters mit daran angeordneter Bodenformträgereinheit gemäß einer Ausführungsform der erfindungsgemäßen Vorrichtung, und
- Fig. 5: eine Prinzipskizze des Dämpfungselementes gemäß einer Ausführungsform der Vorrichtung.

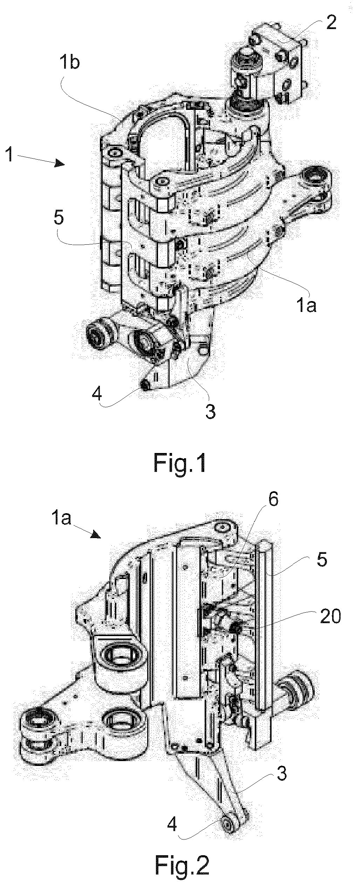

Fig. 1 zeigt eine Formträgereinheit 1 mit einem rechten Formträger 1a und einem linken Formträger 1b in einer geschlossenen Position. D.h. die beiden Formträger 1a und 1b greifen mittels an jedem Formträger 1a, 1b angeordneten Greif- bzw. Halteelementen 5 ineinander ein, um ein zu bearbeitendes, d.h. zu formendes Behältnis zu umschließen. Damit bilden die Halteelemente 5 einen Verriegelungsmechanismus. Eine Blasform, welche durch die Formträger 1a, 1b gehalten wird, ist hier nicht dargestellt.

Beide Formträger 1a und 1b sind vorzugsweise um eine gemeinsame Achse schwenkbar bzw. drehbar an einem Formträgerhalter 2, welcher hier nur ausschnittweise dargestellt ist, angeordnet, um eine Bewegung zum Öffnen bzw. zum Schließen der Formträgereinheit 1 zu ermöglichen.

An dem rechten Formträger 1a ist zudem ein Kurvenhebel 3 mit einer an dem Kurvenhebel 3 angeordneten Kurvenrolle 4 befestigt. Dabei erstreckt sich der Kurvenhebel 3 im Wesentlichen in senkrechter Richtung unterhalb des rechten Formträgers 1a von diesem nach unten sowie gleichzeitig in Richtung des zweiten Formträgers 1b. Demnach beschreibt der Kurvenhebel 3 im Wesentlichen eine L-Form.

In der Fig. 2 wird der bereits in Fig. 1 dargestellte rechte Formträger 1a nochmals verdeutlicht gezeigt. Zudem weist der rechte Formträger 1a zusätzlich ein Dämpfungselement 20 auf, welches sich im Wesentlichen horizontal in Richtung des linken Formträgers (hier nicht gezeigt) erstreckt. Demzufolge ist das Dämpfungselement 20, welches beispielsweise ein Stoßdämpfer sein kann, derart auf der Stirnfläche 6 des rechten Formträgers 1a angeordnet, dass es bei der aufeinander zu gerichteten Bewegung der beiden Formträger 1a, 1b erfolgende Schließbewegung der Formträgereinheit 1 dämpfen kann, um ein Aufeinanderschlagen der beiden Formträger 1a und 1b zu verhindern, indem die Schwenkbewegung der beiden Formträger 1a, 1b um den Formträgerhalter (hier nicht gezeigt) abgebremst wird. Das Dämpfungselement 20 ist zu der Schwenkachse der Formträger 1a, 1b gegenüberliegend angeordnet, so dass sich demzufolge das zu behandelnde Behältnis (hier nicht gezeigt) wenigstens zeitweise zwischen der Schwenkachse und dem Dämpfungselement 20 befindet.

Es ist jedoch auch möglich, dass das Dämpfungselement an dem linken Formträger 1b angeordnet ist. Auch könnte das Dämpfungselement bezüglich des Behältnisses auf der gleichen Seite wie die erwähnte Schwenkachse angeordnet sein.

Gemäß der Fig.1 ist das Dämpfungselement 20 relativ mittig in Bezug auf die sich senkrecht erstreckende Länge des rechten Formträgers 1a angeordnet. Es ist jedoch auch denkbar, dass das Dämpfungselement 20 im oberen oder im unteren Bereich der Stirnfläche 6 angeordnet sein kann. Weiterhin ist es möglich, dass anstatt eines Dämpfungselementes zwei oder mehr Dämpfungselemente 20 angeordnet sein können, welche sich entlang der Stirnfläche 6 des rechten Formträgers und/oder entlang der Stirnfläche des linken Formträgers (hier nicht gezeigt) verteilen.

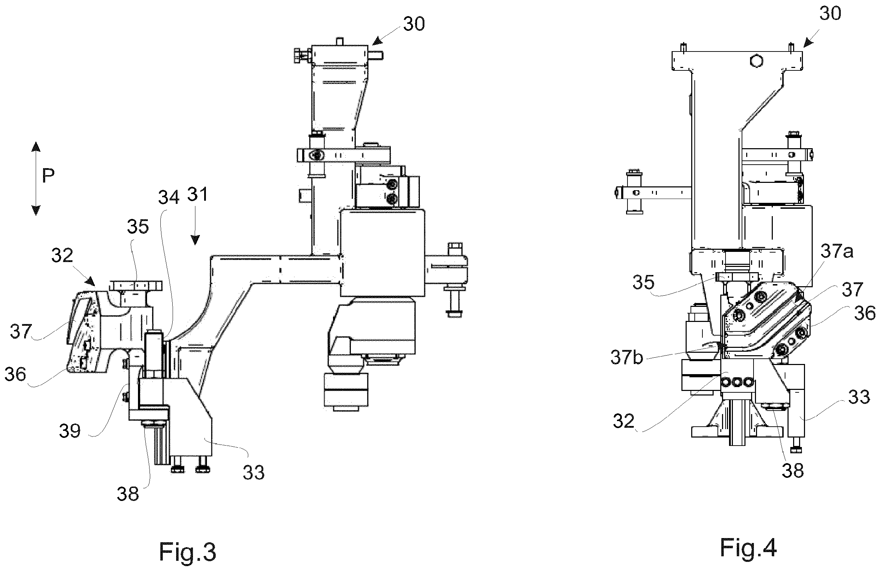

Die Prinzipskizzen der Figuren 3 und 4 zeigen jeweils einen Formträgerhalter 30 mit daran angeordneter Bodenformträgerhubeinrichtung 31 in unterschiedlichen Ansichten.

Demnach zeigt die Prinzipskizze der Fig.3 eine Seitenansicht des Formträgerhalters 30 und der Bodenformträgerhubeinrichtung 31, welche sich aus einer im Wesentlichen vertikal zum Formträger 30 beweglichen Bodeneinheit 32 und einem dementsprechend starren und zum Formträger 30 unbeweglichen Grundträger 33 zusammensetzt.

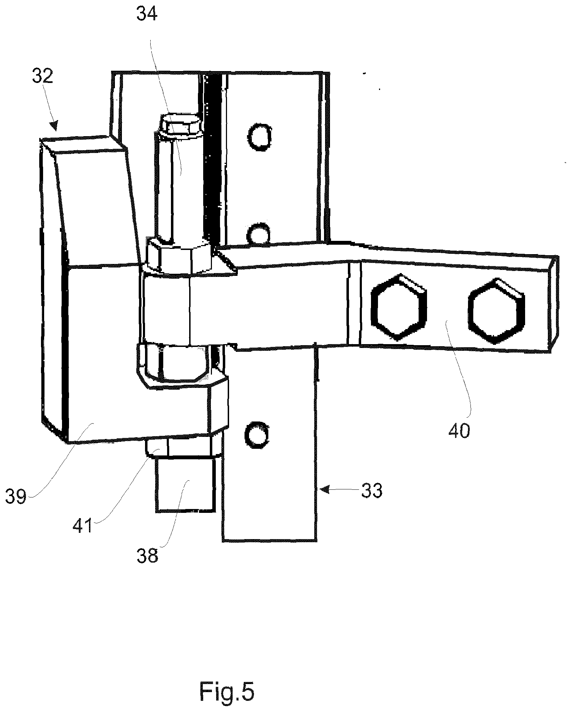

An dem Grundträger 33 ist ein erstes Dämpfungselement 34 zur Dämpfung und Begrenzung der Bewegung der Bodeneinheit 32, welche sich im Wesentlichen in vertikaler Richtung (Doppelpfeil P) auf und ab bewegt, sofern die Formträgereinheit (hier nicht gezeigt) geschlossen bzw. geöffnet wird, angeordnet. Diese Bewegung der Bodeneinheit 32 bzw. des Bodenformträgers 35, welcher die Bodenform (hier nicht gezeigt) in Richtung der Formträgereinheit beim Schließen der Formträgereinheit oder beim Öffnen der Formträgereinheit von der Formträgereinheit weg transportiert, wird über einem Anschlagbolzen 38, welcher über einen Haltefinger 39 mit der beweglichen Bodeneinheit 32 verbunden ist und mit dem Dämpfungselement 34 interagiert, gedämpft und begrenzt. Der genaue Ablauf bei dieser Dämpfung wird unter Berücksichtigung der Fig. 5 beschrieben.

Der Anschlagbolzen 38 bzw. der Anschlagkörper 38 erstreckt sich folglich vorzugsweise in im Wesentlichen vertikaler Richtung durch einen Bereich des Haltefingers 39 und einen Bereich des Grundträgers 33 bis hinauf zum Dämpfungselement 34, mit welchem es für eine Dämpfung und/oder Begrenzung der Bewegung interagiert. Bevorzugt erstreckt sich der Haltebolzen damit auch parallel zu der Schwenkachse der Formträgereinheit

Eine Bodenkurve 36 mit einer in der Bodenkurve 36 verlaufenden Führungsschiene 37 ist ebenfalls an der beweglichen Bodeneinheit 32 angeordnet. Durch ein Eingreifen und ein entsprechendes Entlangfahren der Kurvenrolle des Kurvenhebels (beides hier nicht gezeigt) in der Bodenkurve 36 bzw. der Führungsschiene 37 bzw. der Führungsnut 37 ist eine vertikale Hubbewegung der Bodeneinheit 32 und dementsprechend des Bodenformträgers 35 und damit der Bodenform (hier nicht gezeigt) realisierbar.

Die Fig. 4 zeigt eine Prinzipskizze des Aufbaues gemäß Fig.3, jedoch in einer Vorder- bzw. Frontansicht. D.h. der Komponentenaufbau der Fig.3 wurde für die Ansicht der Fig.4 um ca. 90° nach rechts gedreht.

In der Fig. 4 zeigt sich deutlich, dass die Bodenkurve 36 eine Führungsschiene 37 bzw. eine Führungsnut 37 aufweist, welche sich in einem ersten Bereich 37a in einem definierten Winkel in Richtung des linken Formträgers (hier nicht gezeigt) erstreckt und dementsprechend einen schräg nach unten verlaufenden ersten Bereich 37a aufweist. Der zweite Bereich 37b der Führungsschiene 37 verläuft im Wesentlichen horizontal zur Bildebene, was in etwa der Auflagefläche des Bodenformträgers entspricht.

Infolgedessen wird bei einer Schließbewegung der Formträgereinheit (hier nicht gezeigt) die Kurvenrolle des Kurvenhebels, welcher beispielsweise an dem rechten Formträger verdrehsteif bzw. starr angeordnet ist (vgl. Fig.1) derart in der Führungsschiene 37 der Bodenkurve 36 geführt, dass dadurch der Bodenkurve 36 eine aufwärtsgerichtete Bewegung aufgezwungen wird. Die Steigung der Führungsschiene 37 der Bodenkurve 36 definiert folglich die Auslenkung bzw. die Geschwindigkeit, mit welcher die Bodenkurve hinauf bzw. hinab bewegt wird.

Dementsprechend bedeutet eine große Steigung der Führungsschiene 37 bzw. des ersten Bereiches 37a der Führungsschiene 37 eine schnelle Bewegung der Bodenkurve 36 aufwärts bzw. abwärts.

Nachdem die Kurvenrolle nun den ersten Bereich 37a der Führungsschiene 37 entlang gefahren ist bzw. entlang geschoben bzw. gerollt wurde, gelangt die Kurvenrolle nun in den zweiten Bereich 37b der Bodenkurve 36. Während die Kurvenrolle den zweiten Bereich 37b entlang rollt erfolgt keine weitere Aufwärtsbewegung der Bodenkurve 36 und infolgedessen auch keine weitere Aufwärtsbewegung des Bodenformträgers 35. Jetzt werden lediglich die Formträger derart miteinander verbunden, dass die Bodenform in die Formträgereinheit aufgenommen und vollständig von dieser umschlossen wird, um folglich einen zur Umgebung abgedichteten Innenraum zu bilden, in welchem die Behältnisse geblasen und gestreckt werden können.

D.h., dass die Aufwärtsbewegung der Bodeneinheit 32 durch das Schließen der Formträgereinheit und die Abwärtsbewegung der Bodeneinheit 32 durch das Öffnen der Formträgereinheit eingeleitet wird, indem der Kurvenhebel die Bodeneinheit 32 hebt oder senkt.

In der Fig.5 wird eine Prinzipskizze des Dämpfungselementes 34 gemäß einer Ausführungsform der erfindungsgemäßen Vorrichtung gezeigt, wobei das Dämpfungselement 34 ein pneumatischer, hydraulischer oder auch mechanischer Stoßdämpfer sein kann. Das Dämpfungselement 34 ist an einem Halteklotz 40 verdrehsteif und unbeweglich bzw. starr angeordnet, so dass die Position bzw. Lage des Dämpfungselementes 34 selbst in Bezug auf den Halteklotz 40 nicht verändert werden kann.

Ein Anschlagbolzen 38, welcher zur Dämpfung und/oder Begrenzung der im Wesentlichen vertikalen Bewegung der Bodeneinheit mit dem Dämpfungselement 34 interagiert, ist an einem Haltefinger 39 ebenfalls verdrehsteif und unbeweglich bzw. starr angeordnet. Der Anschlagbolzen 38 ist beispielsweise über eine Sechskantmutter 41 mit dem Haltefinger 39 verbunden.
Wird nun aufgrund der bereits oben beschriebenen Bewegung die Bodenkurve (hier nicht gezeigt) beispielsweise aufwärts bewegt, so erfolgt eine ebenfalls aufwärts gerichtete Bewegung der Bodeneinheit 32 mit samt dem Bodenformträger und der Bodenform (beides hier nicht gezeigt). Dementsprechend wird ebenfalls der Haltefinger 39 aufwärts bewegt, wodurch der Anschlagbolzen 38 mit dem Dämpfungselement 34, je nach dessen Aufbau, wechselwirkt bzw. gegen das Dämpfungselement 34 fährt, wodurch die Masse der Bodeneinheit 32 vor dem Erreichen ihrer Endposition abgebremst wird.

Ist beispielsweise das Dämpfungselement 34 ein hydraulischer Stoßdämpfer, so stellt der Anschlagsbolzen 38 einen in dem Zylinder des Stoßdämpfers geführten Kolben dar, welcher ein flüssiges Medium, wie beispielsweise Öl gegen einen definierten Widerstand verdrängen muss, wenn der Kolben, d.h. der Anschlagsbolzen 38 bei einer Aufwärtsbewegung der Bodeneinheit 32 in dem Zylinder des Stoßdämpfers ebenfalls aufwärts bewegt wird.

Es ist auch möglich, dass die Dämpfung des Anschlagbolzens beispielsweise durch eine Druckfeder ermöglicht wird, wie bei beispielsweise mechanischen Stoßdämpfern. Die Feder ist in dem Zylinder des Dämpfungselementes 34 beispielsweise derart eingebaut, dass diese bei einer Aufwärtsbewegung der Bodeneinheit 32 gespannt (zusammengedrückt) wird und bei einer Abwärtsbewegung entspannt wird. Eine definierte Bewegungsbegrenzung ist dann beispielsweise auch über diese Feder möglich, wenn diese z.B. auf Block gefahren und folglich ein Zusammendrücken der Feder nicht mehr möglich ist. So wird auch die Aufwärtsbewegung der Bodeneinheit an dieser Stelle begrenzt.
Infolge der oben beschriebenen Dämpfung der Bewegung der Bodeneinheit 32 kann ein überschwingen der Bodeneinheit 32, bevor diese ihre Endposition erreicht hat, verhindert werden, während zusätzlich ein Endanschlag eine Bewegungsbegrenzung der Bodeneinheit 32 durch das Dämpfungselement 34 der erfindungsgemäßen Vorrichtung realisiert wird.

### Bezugszeichenliste

- 1: Formträgereinheit
- 1a: rechter Formträger
- 1b: linker Formträger
- 2: Formträgerhalter
- 3: Kurvenhebel
- 4: Kurvenrolle
- 5: Greif- bzw. Halteelemente
- 20: erstes horizontal wirkendes Dämpfungselement
- 30: Formträgerhalter
- 31: Bodenformträgerhubeinrichtung
- 32: Bodeneinheit
- 33: Grundträger
- 34: Dämpfungselement
- 35: Bodenformträger
- 36: Bodenkurve
- 37: Führungsschiene
- 37a: Erster Bereich der Führungsschiene
- 37b: Zweiter Bereich der Führungsschiene
- 38: Anschlagbolzen
- 39: Haltefinger
- 40: Halteklotz
- 41: Sechskantmutter
- P: Doppelpfeil

## Patentansprüche

1. Vorrichtung zum Formen von Behältnissen, wobei die Vorrichtung mindestens eine Formträgereinheit (1) zum Halten von Blasformteilen und einen Bodenformträger (35) zum Halten einer Bodenform sowie eine Bodenformträgerhubeinrichtung (31) zur Bewegung des Bodenformträgers (35) in Verbindung mit der Bewegung der Formträgereinheit (1) aufweist, wobei die Formträgereinheit (1) wenigstens zwei Formträger (1a, 1b) aufweist, welche das zu bearbeitende Behältnis zumindest während eines Formvorgangs umschließen kann, und wobei der Bodenformträger (35) mittels der Bodenform einen Bodenbereich des zu behandelnden Behältnisses abdecken kann, **dadurch gekennzeichnet, dass**
die Bodenformträgerhubeinrichtung (31) mindestens ein erstes Dämpfungselement (34) zum Dämpfen und Begrenzen der vertikalen Bewegung des Bodenformträgers (35) gegenüber und in Richtung der Formträgereinheit (1) aufweist, wobei die Bodenformträgerhubeinrichtung (31) eine zu einem Haupthalteelement bewegliche Bodeneinheit (32) und einen dazu unbeweglichen Grundträger (33) aufweist, wobei der Bodenformträger (35) beweglich zu dem Grundträger (33) angeordnet ist, und wobei demnach der Bodenformträger an der beweglichen Bodeneinheit angeordnet ist, um die Bodenform beim Schließen der Formträgereinheit in Richtung der Formträgereinheit zu bewegen, das erste Dämpfungselement (34) an dem Grundträger (33) der Bodenformträgerhubeinrichtung (31) angeordnet ist.

2. Vorrichtung nach Anspruch 1,
**dadurch gekennzeichnet, dass**
die Formträgereinheit (1) schwenkbar an einem Formträgerhalter (2) angeordnet ist, wobei der Formträgerhalter (2) und die Bodenformträgerhubeinrichtung (31) verdrehsteif miteinander verbunden sind.

3. Vorrichtung nach zumindest einem der vorhergehenden Ansprüche,
**dadurch gekennzeichnet, dass**
ein Haltefinger (39), welcher mit der Bodeneinheit (32) der Bodenformträgerhubeinrichtung (31) gekoppelt ist und sich mit dieser bewegt, einen bei dem Schließvorgang der Formträgereinheit (1) auf das Dämpfungselement (34) auftreffenden Anschlagsbolzen (38) aufweist.

4. Vorrichtung nach zumindest einem der vorhergehenden Ansprüche,
**dadurch gekennzeichnet, dass**
ein an mindestens einem der mindestens zwei Formträger (1a, 1b) angeordneter und durch den Formträger (1a, 1b) beweglicher Kurvenhebel (3) eine Kurvenrolle (4) aufweist, welche in einer Bodenkurve (36) bewegbar angeordnet ist.

5. Vorrichtung nach Anspruch 4,
**dadurch gekennzeichnet, dass**
die Bodeneinheit (32) der Bodenformträgerhubeinrichtung (31) zur Bewegungsübertragung derart mit der Bodenkurve (36) verbunden ist, dass die Bodeneinheit (32) sowie die Bodenform im Wesentlichen senkrecht beweglich sind.

6. Vorrichtung nach zumindest einem der vorhergehenden Ansprüche,
**dadurch gekennzeichnet, dass**
mindestens ein Formträger (1a, 1b) der Formträgereinheit (1) ein zweites, im Wesentlichen horizontal dämpfend wirkendes Dämpfungselement (20) zur Dämpfung der Bewegung der sich schließenden Formträgereinheit (1) aufweist.

7. Vorrichtung nach zumindest einem der vorhergehenden Ansprüche,
**dadurch gekennzeichnet, dass**
das erste (34) und/oder das zweite Dämpfungselement (20) eine Feder aufweist.

8. Vorrichtung nach zumindest einem der vorhergehenden Ansprüche,
**dadurch gekennzeichnet, dass**
das erste (34) und/oder das zweite Dämpfungselement (20) ein Stoßdämpfer ist.

9. Verfahren zum gedämpften Schließen einer Formträgereinheit (1) und eines Bodenformträgers (35) einer Blasform zum Formen von Behältnissen,
**dadurch gekennzeichnet, dass**
während der Bewegung einer Bodeneinheit (32), in Richtung hin zur Formträgereinheit (1), ein Dämpfungselement (34), welches mit einem unbeweglichen Grundträger (33) einer Bodenformträgerhubeinrichtung (31) verbunden ist, die Bewegung der Bodeneinheit (32) in Richtung hin zur Formträgereinheit (1) dadurch dämpft, dass ein Anschlagsbolzen (38), welcher mit einer beweglichen Bodeneinheit (32) der Bodenformträgerhubeinrichtung (31) verbunden ist, gegenüber dem Dämpfungselement (34) bewegt wird, wobei die Bodenformträgerhubeinrichtung (31) eine zu einem Haupthalteelement bewegliche Bodeneinheit (32) und einen dazu unbeweglichen Grundträger (33) aufweist, wobei der Bodenformträger (35) beweglich zu dem Grundträger (33) angeordnet ist, und wobei demnach der Bodenformträger an der beweglichen Bodeneinheit angeordnet ist, um die Bodenform beim Schließen der Formträgereinheit in Richtung der Formträgereinheit zu bewegen, wobei das erste Dämpfungselement (34) an dem Grundträger (33) der Bodenformträgerhubeinrichtung (31) angeordnet ist.

## Claims

1. Device for forming containers, wherein the device comprises at least one mould carrier unit (1) for holding blow mould parts and a base mould carrier (35) for holding a base mould and a base mould carrier lift device (31) for moving the base mould carrier (35) in conjunction with the movement of the mould carrier unit (1), wherein the mould carrier unit (1) comprises at least two mould carriers (1a, 1b) which can surround the container to be processed at least during a moulding process, and wherein the base mould carrier (35) by means of the base mould can cover a base area of the container to be treated,
**characterised in that**
the base mould carrier lift device (31) comprises at least one first damping element (34) for damping and limiting the vertical movement of the base mould carrier (35) in relation to the mould carrier unit (1), wherein the base mould carrier lift device (31) comprises a base unit (32) mobile in relation to a main holding element and a base carrier (33) immobile thereto, wherein the base mould carrier (35) is arranged mobile in relation to the base carrier (33) and wherein, accordingly, the base mould carrier is arranged on the mobile base unit, to move the base mould towards the mould carrier unit when the mould carrier unit is closed, the first damping element (34) is arranged on the base carrier (33) of the base mould carrier lift device (31).

2. Device according to claim 1,
**characterised in that**
the mould carrier unit (1) is arranged swivellably on a mould carrier holder (2), wherein the mould carrier holder (2) and the base mould carrier lift device (31) are connected together rotationally stationary.

3. Device according to at least one of the preceding claims,
**characterised in that**
a retaining finger (39), which is coupled with the base unit (32) of the base mould carrier lift device (31) and moves with this, comprises a stop bolt (38) which meets the damping element (34) on the closing movement of the mould carrier unit (1).

4. Device according to at least one of the preceding claims,
**characterised in that**
a curve lever (3) which is arranged on at least one of the at least two mould carriers (1a, 1b) and can be moved by the mould carrier (1a, 1b), comprises a curve roller (4) which is arranged mobile in a base curve (36).

5. Device according to claim 4,
**characterised in that**
the base unit (32) of the base mould carrier lift device (31) for movement transfer is connected with the base curve (36) such that the base unit (32) and the base mould are mobile substantially vertically.

6. Device according to at least one of the preceding claims,
**characterised in that**
at least one mould carrier (1a, 1b) of the mould carrier unit (1) comprises a second damping element (20) which substantially acts damping horizontally to damp the movement of the closing mould carrier unit (1).

7. Device according to at least one of the preceding claims,
**characterised in that**
the first (34) and/or the second damping element (20) has a spring.

8. Device according to at least one of the preceding claims,
**characterised in that**
the first (34) and/or the second damping element (20) is a shock absorber.

9. Method for damped closing of a mould carrier unit (1) and a base mould carrier (35) of a blow mould for forming containers,
**characterised in that**
during the movement of a base unit (32) towards the mould carrier unit (1) a damping element (34) which is connected with an immobile base carrier (33) of a base mould carrier lift device (31) damps the movement towards the mould carrier unit (1) of the base unit (32), **in that** a stop bolt (38) connected with a moving base unit (32) of the base mould carrier lift device (31) is moved against the damping element (34), wherein the base mould carrier lift device (31) comprises a base unit (32) mobile in relation to a main holding element and a base carrier (33) immobile thereto, wherein the base mould carrier (35) is arranged mobile in relation to the base carrier (33) and wherein, accordingly, the base mould carrier is arranged on the mobile base unit, to move the base mould towards the mould carrier unit when the mould carrier unit is closed, wherein the first damping element (34) is arranged on the base carrier (33) of the base mould carrier lift device (31).

## Revendications

1. Dispositif de formage de récipients, dans lequel le dispositif présente au moins une unité de support de moule (1) pour le maintien de pièces moulées par soufflage et un support de moule de fond (35) pour le maintien d'un moule de fond ainsi qu'un dispositif de levage de support de moule de fond (31) pour le déplacement du support de moule de fond (35) en liaison avec le déplacement de l'unité de support de moule (1), dans lequel l'unité de support de moule (1) présente au moins deux supports de moule (1a, 1b), laquelle peut entourer le récipient à traiter au moins pendant un processus de formage, et dans lequel le support de moule de fond (35) peut recouvrir au moyen du moule de fond une zone de fond du récipient à traiter,
**caractérisé en ce que**
le dispositif de levage de support de moule de fond (31) présente au moins un premier élément d'amortissement (34) pour l'amortissement et la limitation du déplacement vertical du support de moule de fond (35) par rapport à et en direction de l'unité de support de moule (1), dans lequel le dispositif de levage de support de moule de fond (31) présente une unité de fond (32) mobile par rapport à un élément de maintien principal et un support de base (33) immobile par rapport à celui-ci, dans lequel le support de moule de fond (35) est disposé de manière mobile par rapport au support de base (33), et dans lequel par conséquent le support de moule de fond est disposé au niveau de l'unité de fond mobile afin de déplacer le moule de fond lors de la fermeture de l'unité de support de moule en direction de l'unité de support de moule, le premier élément d'amortissement (34) est disposé au niveau du support de base (33) du dispositif de levage de support de moule de fond (31).

2. Dispositif selon la revendication 1,
**caractérisé en ce que**
l'unité de support de moule (1) est disposée de manière pivotante au niveau d'un appui de support de moule (2), dans lequel l'appui de support de moule (2) et le dispositif de levage de support de moule de fond (31) sont raccordés l'un à l'autre de manière résistante à la torsion.

3. Dispositif selon au moins l'une quelconque des revendications précédentes,
**caractérisé en ce que**
un doigt de maintien (39) qui est couplé à l'unité de fond (32) du dispositif de levage de support de moule de fond (31) et se déplace avec celle-ci, présente un boulon de butée (38) rencontrant l'élément d'amortissement (34) lors d'un processus de fermeture de l'unité de support de moule (1).

4. Dispositif selon au moins l'une quelconque des revendications précédentes,
**caractérisé en ce que**
un levier à came (3) disposé au niveau d'au moins un des au moins deux supports de moule (1a, 1b) et mobile par le support de moule (1a, 1b) présente un galet de came (4) qui est disposé de manière mobile dans une came de fond (36).

5. Dispositif selon la revendication 4,
**caractérisé en ce que**
l'unité de fond (32) du dispositif de levage de support de moule de fond (31) est raccordée pour la transmission de déplacement à la came de fond (36) de telle manière que l'unité de fond (32) ainsi que le moule de fond soient mobiles sensiblement perpendiculairement.

6. Dispositif selon au moins l'une quelconque des revendications précédentes,
**caractérisé en ce que**
au moins un support de moule (1a, 1b) de l'unité de support de moule (1) présente un second élément d'amortissement (20) agissant par amortissement sensiblement horizontal pour l'amortissement du déplacement de l'unité de support de moule (1) se fermant.

7. Dispositif selon au moins l'une quelconque des revendications précédentes,
**caractérisé en ce que**
le premier (34) et/ou le second élément d'amortissement (20) présente un ressort.

8. Dispositif selon au moins l'une quelconque des revendications précédentes,
**caractérisé en ce que**
le premier (34) et/ou le second élément d'amortissement (20) est un amortisseur de chocs.

9. Procédé de fermeture amortie d'une unité de support de moule (1) et d'un support de moule de fond (35) d'un moule de soufflage pour le formage de récipients,
**caractérisé en ce que**
pendant le déplacement d'une unité de fond (32), en direction d'une unité de support de moule (1), un élément d'amortissement (34) qui est raccordé à un support de base (33) immobile d'un dispositif de levage de support de moule de fond (31) amortit le déplacement de l'unité de fond (32) en direction de l'unité de support de moule (1) du fait qu'un boulon de butée (38) qui est raccordé à une unité de fond (32) mobile du dispositif de levage de support de moule de fond (31), est déplacé par rapport à l'élément d'amortissement (34), dans lequel le dispositif de levage de support de moule de fond (31) présente une unité de fond (32) mobile par rapport à un élément de maintien principal et un support de base (33) immobile par rapport à celui-ci, dans lequel le support de moule de fond (35) est disposé de manière mobile par rapport au support de base (33), et dans lequel par conséquent le support de moule de fond est disposé au niveau de l'unité de fond mobile afin de déplacer le moule de fond lors de la fermeture de l'unité de support de moule en direction de l'unité de support de moule, dans lequel le premier élément d'amortissement (34) est disposé au niveau du support de base (33) du dispositif de levage de support de moule de fond (31).
